# EUROPEAN PATENT APPLICATION

(11) **EP 2 813 386 A1**
(43) Date of publication of application: **17.12.2014**
(21) Application number: 13382226.2
(22) Date of filing: 14.06.2013
(51) Int. Cl.: B60J 3/02

(54) **Arm for a sunvisor, sunvisor, and method for producing an arm for a sunvisor**

(71) Applicant: GRUPO ANTOLIN-INGENIERIA, S.A., 09007 Burgos (ES)
(72) Inventor: Marcos Primo, Ignacio, 09007 BURGOS (ES); Bernard, Vincent, 88360 Rupt-sur-Moselle (VOSGES 88) (FR)
(74) Representative: Stiebe, Lars Magnus

(57) **Abstract**

In one embodiment, the arm for a sunvisor comprises a tubular core (1) extending throughout a plastic casing (2), said arm further comprising at least two electrical contacts (3, 4) accessible from outside said plastic casing. The arm further comprises an insert (5) inserted into a distal end of said core (1), said insert (5) being at least partly covered by said plastic casing (2), said at least two electrical contacts (3, 4) being mounted on said insert.

In an alternative embodiment, the arm comprises a plastic body (100), and at least one electrical contact (101, 102) extending out of said plastic body. Said at least one electrical contact (101, 102) is wrapped around at least a portion of said plastic body (100).

## Description

### TECHNICAL FIELD

The invention relates to arms for sunvisors for use in vehicles such as automobiles.

### STATE OF THE ART

Sunvisors used in vehicles generally comprise a sunvisor body which is pivotably arranged on a shaft or arm, said arm being fixed to the interior of the vehicle, generally in correspondence with the windscreen of the vehicle. The body is pivotally arranged on the arm so that it can be pivoted between a position substantially aligned with the inside of the roof of the vehicle, and a position in which it protects the driver's or passenger's eyes from the sun. Generally, the arm is pivotally mounted to the vehicle. Arms of this kind are often obtained at least in part by moulding. Frequently, arms of this kind are generally L-shaped.

Sometimes, the body of the sunvisor includes electrically driven accessories, such as one or more lamps, which have to be connected to an external power source. It is known in the art to establish this connection through the arm of the sunvisor. In such cases, the arm of the sunvisor, which can have an external surface of a plastic and/or polymeric material, for example, obtained by moulding said material onto a base member such as a metal tube or other kind of tube or core, can feature one or more, such as two, electrical contacts, which can enter into contact with corresponding contacts provided for in the body of the sunvisor. For example, the contacts of the arm can be arranged so that they make contact with the contacts of the body of the sunvisor, or not, depending on the angular position of the body of the sunvisor in relation to the arm. These contacts of the arm can be connected to an external power source through corresponding wires or conductors that extend through the interior of the arm. The contacts themselves are arranged so that they are visible at the surface of the arm, often close to the distal end of the arm, the distal end being the end of the arm that is remote from the end at which the arm is anchored to the vehicle.

EP-A-1502788 discloses some examples of this kind of sunvisor arms, with conductors extending through the interior of the arm and ending in contacts provided in correspondence with the surface of the arm, close to the distal end of the arm.

A problem involved with this kind of sunvisor arms is the manufacturing of the arms in such a way that the contacts that are accessible at the surface of the arm have to be positioned correctly, both in what regards their axial and angular position on the arm, that is, basically, the distance from the end of the arm and the position on the circumference of the arm. Also, during moulding, the radial position of the contacts must be appropriate to make sure that the contacts will not be covered by the injected plastic and/or polymeric material, but accessible from outside the arm. Thus, means must be provided and care must be taken to arrange the contacts in appropriate positions in the mould prior to moulding, and to maintain the contacts in said positions during moulding.

### DESCRIPTION OF THE INVENTION

A first aspect of the invention relates to an arm for a sunvisor, such as a sunvisor for a vehicle such as an automobile, said arm being arranged for connection to the interior of the vehicle, for example, in the vicinity of a wind screen of the vehicle, said arm being configured to support a pivotably mounted body of said sunvisor. The arm comprises a tubular core. In this context, the term "tubular" implies that the core is hollow, but it should not be interpreted to imply that the core necessarily has a circular cross section; also other cross sections are within the scope of the invention, such as, for example, oval or polygonal cross sections; the core can be of any suitable material, such as, for example, metal. The core extends throughout a plastic casing. In the present context, the term "plastic" should be interpreted to encompass any kind of plastic material and/or polymeric material, for example an insulating material, of the kind that can be injection moulded onto a core; suitable materials include, for example, polypropylene, polyamides and polyoxymethylene (POM). The plastic casing has preferably been moulded onto the tubular core.

The arm further comprises at least two electrical contacts accessible from outside said plastic casing. These contacts can be arranged for making contact with contacts inside a sunvisor body so as to provide for the electrical supply of one or more electrically driven accessories of the sunvisor, such as lamps or similar.

In accordance with the invention, the arm further comprises a support or insert, such as an injection moulded plastic insert, inserted into a distal end of said core, said insert being at least partly covered by said plastic casing, said at least two electrical contacts being mounted on said insert. In some embodiments of the invention, the insert is a simple plastic body or part, for example, obtained by moulding and having a desired configuration, onto which the contacts can be mounted prior to moulding the plastic casing onto the core. The insert can be inserted into the core, and thereby assure that the contacts, positioned on the insert, will be adequately positioned in relation to the core and in relation to the mould cavity used for producing the plastic casing. In some embodiments of the invention, the insert can comprise a portion arranged to abut against the end of the core when inserted into the core. The insert is a cheap and easily implemented means for guaranteeing that the electrical contacts will be correctly placed on the arm during and after the moulding of the arm.

In some embodiments of the invention, the insert comprises at least one portion arranged to abut against an inner surface of the mould when producing the plastic casing by moulding, so as to contribute to a correct positioning of the electrical contacts inside the mould. In some embodiments of the invention, said portion comprises at least one bevelled surface. The use of this kind of portion and/or surface can be helpful in order to provide a correct positioning of the insert in the mould, due to interaction between this portion and/or bevelled surface and a corresponding surface of the mould, for example, when inserting the core and insert into the mould, and/or when closing the mould.

In some embodiments of the invention, said insert is designed to place the electrical contacts in contact with an inner surface of the mould for producing the plastic casing, so as to prevent said contacts from being unintentionally covered by the plastic material during moulding.

In some embodiments of the invention, said insert comprises an end portion inserted into said tubular core, said end portion being provided with at least one channel, preferably at least two channels, for conductors extending throughout said tubular core and electrically connected to respective ones of said electrical contacts.

In some embodiments of the invention, at least one of said electrical contacts comprises a portion at least partly wrapped around at least a portion of the insert. That is, one or more of the contacts can comprise a sheet-like member bent or wrapped around a corresponding portion of the insert. For example, the insert can comprise a portion having a none-circular cross section, for example, including a substantially flat portion, so as to prevent the contact from moving angularly or rotating around the insert.

In some embodiments of the invention, the insert and the contacts are shaped so as to prevent movement of the contacts in relation to the insert, in an axial, radial and/or angular direction.

A second aspect of the invention relates to an arm for a sunvisor, such as a sunvisor for a vehicle such as an automobile, said arm being arranged for connection to the interior of the vehicle, for example, in the vicinity of a wind screen of the vehicle, said arm being configured to support a pivotably mounted body of said sunvisor, said arm comprising a plastic body. In the present context, plastic should be interpreted to encompass any kind of plastic or polymeric material, such as an insulating material, of the kind that can be used to produce a body by moulding, such as by injection moulding onto a core; suitable materials include, for example, polypropylene, polyamides and polyoxymethylene (POM). The arm further comprises at least one electrical contact, such as two electrical contacts, extending out of said plastic body. In accordance with the invention, said at least one electrical contact is wrapped around at least a portion of said plastic body.

This arrangement makes it possible to produce the arm by moulding the plastic body without paying too much attention to the exact positioning of the contacts: the contacts do not have to lie flush with the surface of the plastic body, but in the mould the contacts can extend out of the space arranged to receive the plastic material, and after moulding the contacts can simply be wrapped around the plastic body or around a portion thereof, so as to entirely or partially surround said plastic body. The arrangement makes it possible to correctly position the contacts without any need for special positioning means; the arrangement thus provides for simplicity and low costs. The arm further comprises a core, such as a tubular core, and conductors extending throughout said core, said conductors being connected to respective electrical contacts, at least one of said conductors being connected to said at least one electrical contact. The purpose of this is to connect the sunvisor to the rest of the electrical system of the vehicle.

In some embodiments of the invention, said at least one electrical contact comprises an L-shaped member having a first portion extending within said plastic body, preferably substantially axially within said plastic body, and a second, substantially flat portion, at least partially arranged outside said plastic body.

In some embodiments of the invention, the arm further comprises an insert, such as a plastic insert, said contacts being mounted on said insert to facilitate the placement of the contacts in the mould. For example, the contacts may be fitted onto the insert, for example, by snap fitting, or glued to the insert, or connected to the insert in any other suitable way.

A third aspect of the invention relates to a sunvisor, comprising an arm as described above and a sunvisor body mounted onto said arm. In some embodiments of the invention, the sunvisor body includes electrically driven accessories.

A fourth aspect of the invention relates to a method for manufacturing an arm according to the first aspect of the invention, comprising:
- providing said insert with said electrical contacts mounted onto said insert;
- inserting said insert into said core;
- placing said core and insert in a mould;
- injecting said plastic casing onto said core and insert so as to at least partially cover said core and insert, but leaving said electrical contacts at least partially uncovered, so as to allow said electrical contacts to be connected to corresponding contacts mounted on or in a body of a sunvisor. In some embodiments of the invention, the method further comprises the step of, prior to placing said core and insert in said mould, connecting said electrical contacts to conductors extending throughout said core.

A fifth aspect of the invention relates to a method for manufacturing an arm according to the second aspect of the invention, comprising the steps of:
- placing said at least one electrical contact in a mould, leaving at least a portion of said electrical contact outside a space to be filled with plastic material to produce said plastic body;
- injecting plastic material into the mould to produce said plastic body;
- wrapping said portion of said electrical contact at least partially around said plastic body. In some embodiments of the invention, the method further comprises the step of, prior to placing said at least one electrical contact in said mould, connecting said at least one electrical contact to a corresponding conductor extending throughout said core.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a schematic perspective view of a sunvisor arm according to a first embodiment of the invention.
Figures 2 and 3 are perspective views of an insert used in said first embodiment of the invention.
Figures 4 and 5 are perspective views of additional inserts to be used at an opposite end of the core in said first embodiment of the invention.
Figures 6 is a perspective view illustrating the distal end of the arm in accordance with said first embodiment of the invention.
Figures 7-9 are side views (figures 7 and 8) and a top view (figure 9) of an arm in accordance with a second embodiment of the invention, during different stages of its production.
Figure 10 is a schematic view of a sunvisor incorporating an arm in accordance with the invention.
Figures 11A to 11D are cross sectional views of the sun visor arm and the mould at different stages of a process of manufacturing a sun visor arm in accordance with an embodiment of the invention.

### DESCRIPTION OF WAYS OF CARRYING OUT THE INVENTION

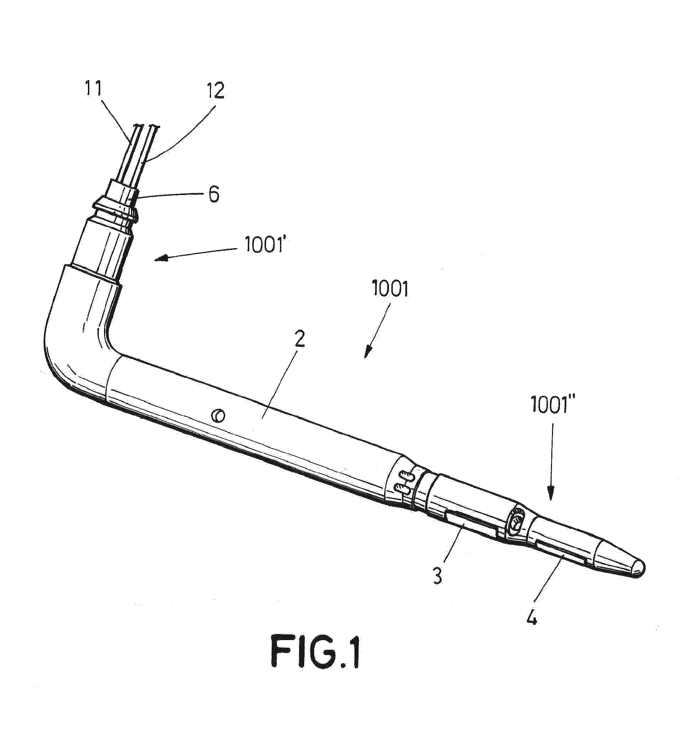

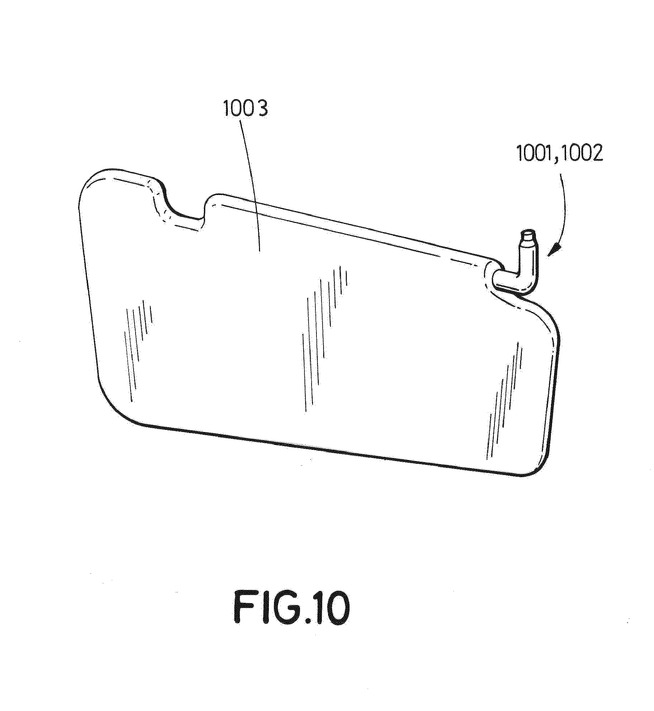

Figure 1 schematically illustrates an arm 1001 comprising a core (not shown) and a plastic casing 2 moulded onto said core, completely covering said core. An insert 6 to be described below is inserted into a rear or proximal end 1001' of said arm, and two insulated wires or conductors 11 and 12 extend into said arm through said insert 6. These conductors are connected to electrical contacts 3 and 4 placed close to a distal end 1001" of said arm, said distal end being arranged to be inserted into a body 1003 of a sunvisor, as suggested in figure 10. The proximal end 1001' is the end at which the arm will be connected to the interior of the vehicle. Electrical contacts 3 and 4 lie substantially flush with the surface of the arm, that is, with the surface of the plastic casing 2, and are not covered by said plastic casing. Thus, these electrical contacts can make contact with corresponding contacts provided for inside the body 1003 of the sunvisor, whereby electrically driven accessories in the body of the sunvisor can be supplied by power through the conductors 11 and 12, from an electrical power source (not shown) in the vehicle.

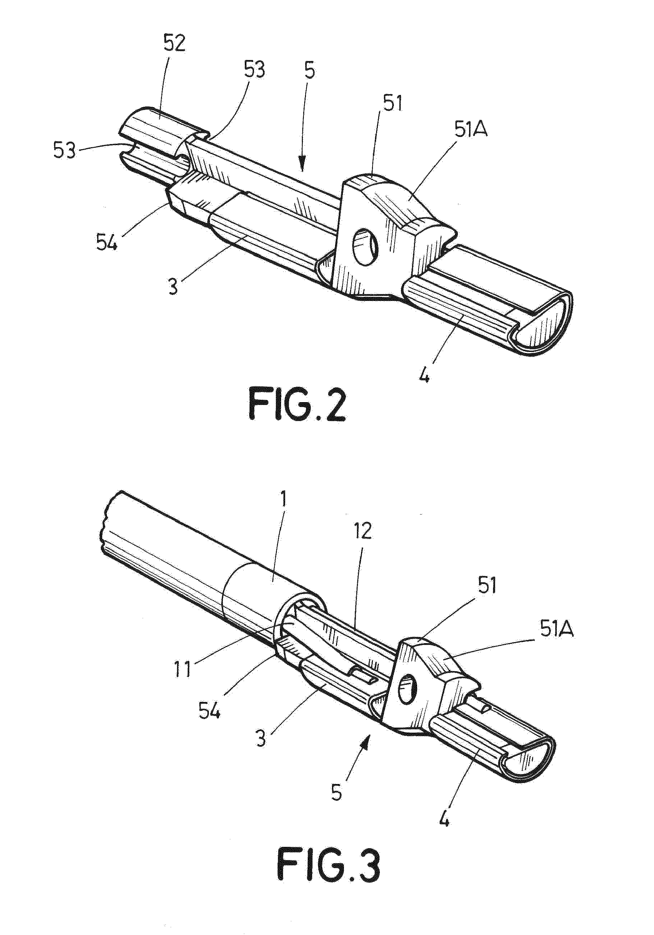

As shown in figures 2 and 3, the electrical contacts 3 and 4 are mounted on a plastic moulded support or insert 5, wrapped around portions of said insert that include flat sub-portions or areas, thereby preventing the contacts from sliding angularly, that is, from rotating or sliding around the longitudinal axis of the insert. Also, a portion 51 of the insert separates the two electrical contacts and block their movement in the axial direction. Portion 51 of the insert is designed so that some of its surfaces, including a bevelled portion 51A of its surfaces, abuts against the inner surface of the mould when the insert is placed in a mould. Thus, portion 51 helps to correctly position the insert 5 and, thus, the electrical contacts 3 and 4, in the mould.

The insert 5 includes a rear portion 52 arranged to be pressure fitted into the tubular core 1, shown in figure 3. This rear portion 52 includes two recesses or channels 53 through which the conductors 11 and 12 can pass, so as to reach the corresponding electrical contacts 3 and 4, to which the conductors can be connected, for example, by soldering.

The insert further comprises a portion 54 arranged to abut against the end of the tubular core 1 when the insert 5 is inserted into said tubular core, thereby assuring a correct positioning of the insert in relation to the tubular core, in the axial direction.

Thus, by mounting the insert in the tubular core, typically a metallic core having, for example, a substantially circular cross section, the electrical contacts will be placed in a well-defined position in relation to the tubular core. When the assembly shown in figure 3 is placed in the mould, the above-mentioned portion 51 assures that the insert is correctly placed in the mould, with the electrical contacts 3 and 4 placed at well defined positions, and in contact with the inner surface of the mould, so as to prevent the electrical contacts 3 and 4 from being covered by the plastic material injected into the mould.

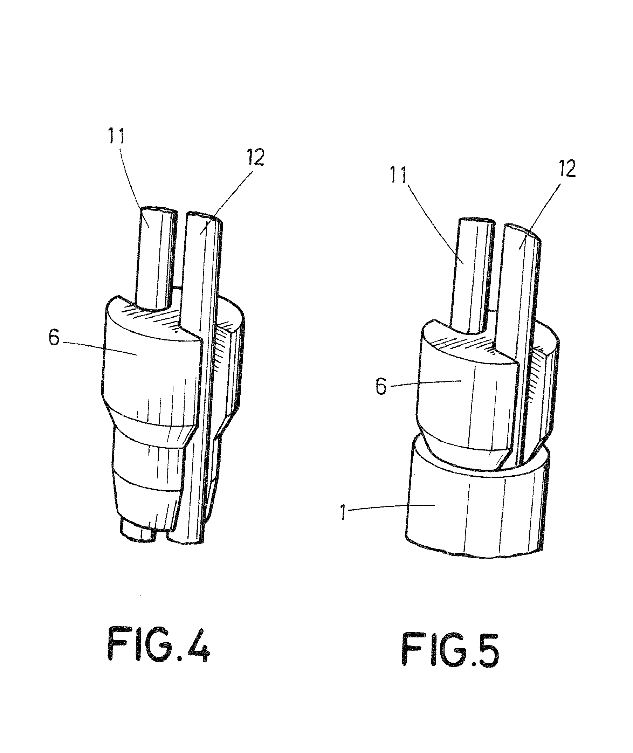

Figures 4 and 5 schematically illustrate the second insert 6 in the form of a plug to be inserted into the rear end of the tubular core 1 and comprising recesses or channels for allowing the wires 11 and 12 to enter the core.

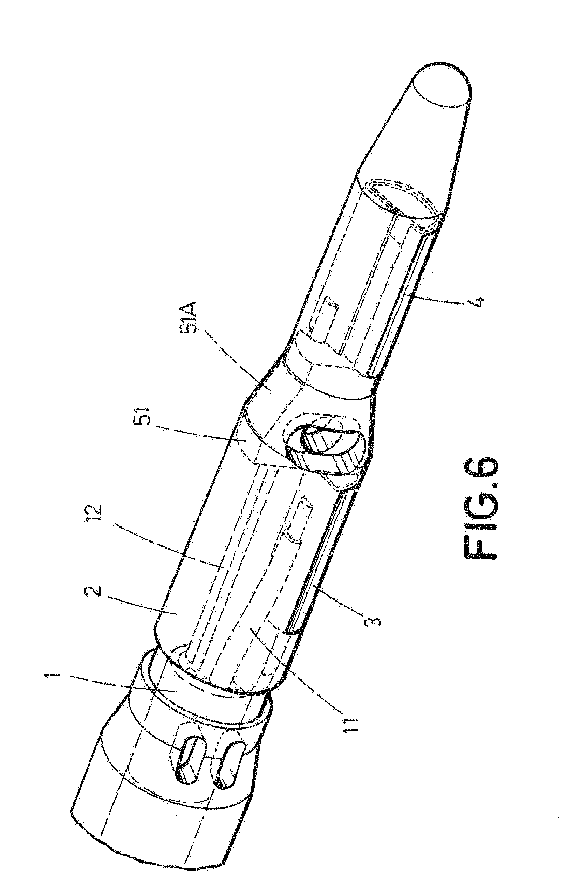

Figure 6 schematically illustrates the distal end of the arm when removed from the mould. The plastic material of the casing 2 covers the tubular core 1 and the insert 5, except for the surface of the portion 51 used for positioning the insert in the mould, and the electrical contacts 3 and 4.

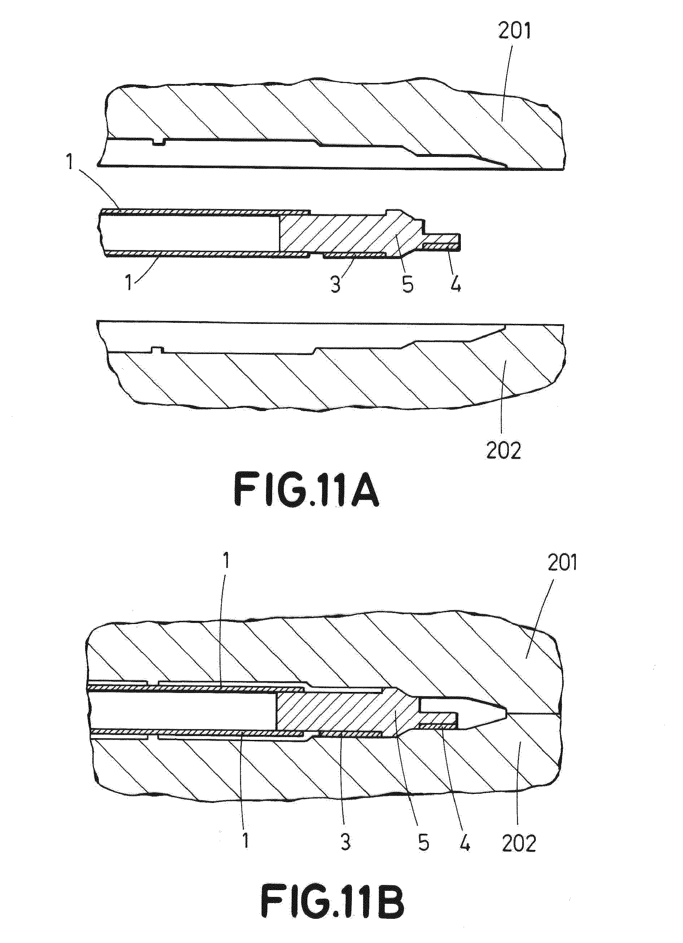

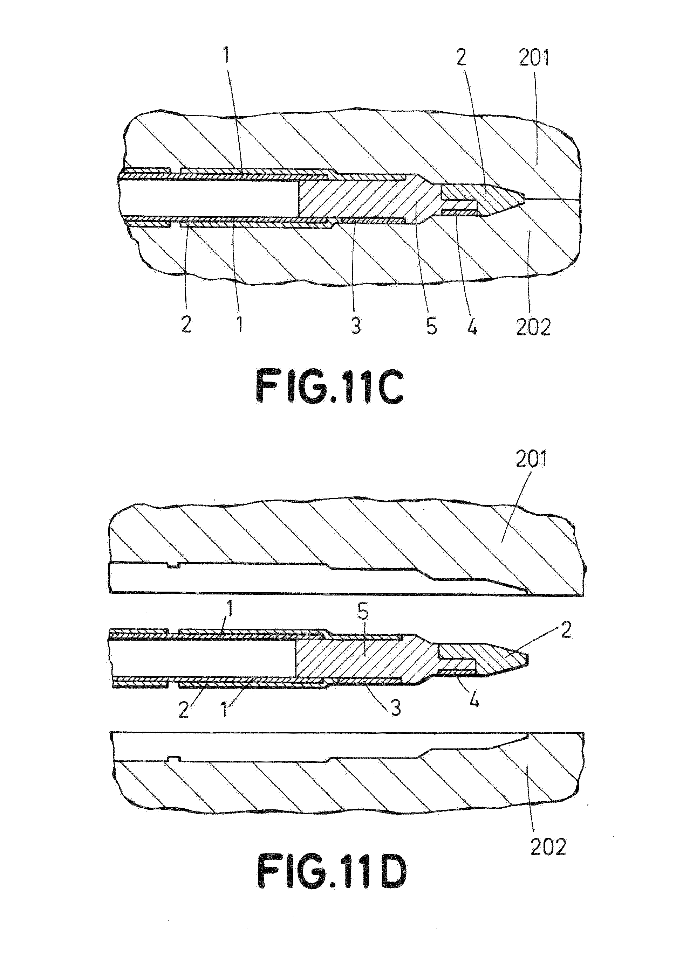

Figures 11A to 11D schematically illustrate the moulding process. In figure 11A, an assembly comprising the core 1, the insert 5 and the electrical contacts 3 and 4 is being inserted into a schematically illustrated mould comprising two mould parts 201 and 202, and in figure 11B the mould has been closed, so that the assembly is positioned in a space delimited by the mould parts 201 and 202. In figure 11C, the plastic material has been injected to form the casing 2, and in figure 11D the mould has been opened allowing the obtained product to be removed from the mould. At this stage, the insert 5 is partly covered by the plastic casing 2.

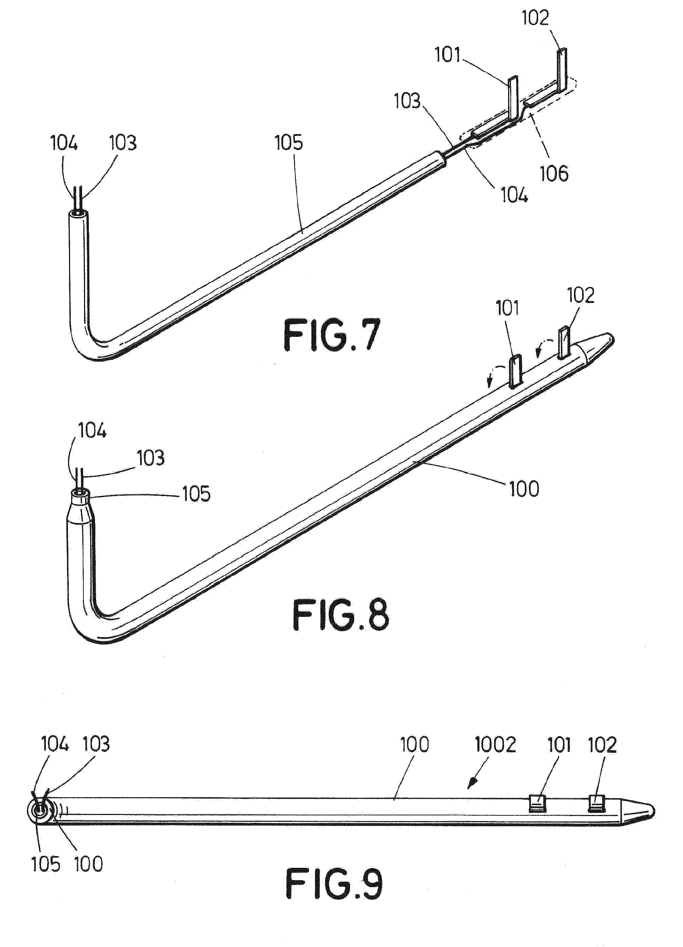

Figure 7 relates to a second embodiment of the invention and schematically illustrates a tubular core 105, which can be of metal or of any other suitable material, and electrical contacts 101 and 102. The electrical contacts 101 and 102 each comprise a substantially L-shaped member stamped out of a flat sheet material. The electrical contacts are connected to conductors which extend throughout the core 105. In some embodiments of the invention, the contacts can be mounted on an insert 106, schematically shown in figure 7, to facilitate the placement and the correct positioning of the contacts in the mould.

The core, conductors and electrical contacts as shown in figure 7 are placed in a mould (not shown), with the distal ends of the electrical contacts 101 and 102 extending outside the space to be filled with the plastic material. Figure 8 illustrates the arm after injection of the plastic material: it comprises a plastic casing or body 100 covering the core, and the ends of the L-shaped contacts extend out of said plastic material, as shown in figure 8. Figure 9 is a top view of the finished arm 1002 after wrapping the extending portions of the L-shaped contacts around a portion of the plastic body 100.

Figure 10 schematically illustrates a sunvisor comprising a sunvisor body 103 mounted onto an arm 1001, 1002 according to any of the embodiments described above.

In this text, the term "comprises" and its derivations, such as "comprising", etc., should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art, for example, as regards the choice of materials, dimensions, components, configuration, etc., within the general scope of the invention as defined in the claims.

## Claims

1. Arm for a sunvisor, said arm comprising a tubular core (1) extending throughout a plastic casing (2), said arm further comprising at least two electrical contacts (3, 4) accessible from outside said plastic casing,
**characterised in that**
said arm further comprises an insert (5) inserted into a distal end of said core (1), said insert (5) being at least partly covered by said plastic casing (2), said at least two electrical contacts (3, 4) being mounted on said insert.

2. Arm according to claim 1, wherein said insert (5) comprises at least one portion (51) arranged to abut against an inner surface of the mould when producing the plastic casing (2) by moulding, so as to contribute to a correct positioning of the electrical contacts (3, 4) inside the mould.

3. Arm according to claim 2, wherein said portion (51) comprises at least one bevelled surface (51A) for positioning the insert (5) in the mould.

4. Arm according to any of the proceeding claims, wherein said insert is designed to place the electrical contacts (3, 4) in contact with an inner surface of the mould for producing the plastic casing (2), so as to prevent said contacts from being covered by the plastic casing (2).

5. Arm according to any of the preceding claims, wherein said insert (5) comprises an end portion (52) inserted into said tubular core (1), said end portion (52) being provided with at least one channel (53) for conductors (11, 12) extending throughout said tubular core (2) and electrically connected to respective ones of said electrical contacts (3, 4).

6. Arm according to any of the preceding claims, wherein at least one of said electrical contacts (3, 4) comprises a portion at least partly wrapped around at least a portion of the insert (5).

7. Arm according to any of the preceding claims, wherein the insert (5) and the contacts (3, 4) are shaped in relation to each other so as to prevent movement of the contacts in relation to the insert, in an axial, radial and/or angular direction.

8. Arm for a sunvisor, said arm comprising a plastic body (100), and at least one electrical contact (101, 102) extending out of said plastic body, said arm further comprising a core, and conductors extending throughout said core, said conductors being connected to respective electrical contacts, at least one of said conductors being connected to said at least one electrical contact (101, 102), wherein said at least one electrical contact (101, 102) is wrapped around at least a portion of said plastic body (100).

9. Arm according to claim 8, wherein said at least one electrical contact comprises an L-shaped member having a first portion extending within said plastic body, and a second, substantially flat portion, at least partially arranged outside said plastic body.

10. Arm according to any of claims 8 and 9, further comprising an insert (106), said contacts being mounted on said insert (106) to facilitate the placement of the contacts in the mould.

11. Sunvisor, comprising an arm (1001, 1002) according to any of the preceding claims, and a sunvisor body (1003) mounted onto said arm.

12. Method for manufacturing an arm according to any of claims 1-7, comprising:
- providing said insert (5) with said electrical contacts (3, 4) mounted onto said insert;
- inserting said insert (5) into said core (1);
- placing said core (1) and insert (5) in a mould;
- injecting said plastic casing (2) onto said core (1) and insert (5) so as to at least partially cover said core (1) and insert (5), but leaving said electrical contacts (3, 4) at least partially uncovered.

13. Method for manufacturing an arm according to any of claims 8-11, comprising the steps of:
- placing said at least one electrical contact (101, 102) in a mould, leaving at least a portion of said electrical contact (101, 102) outside a space to be filled with plastic material to produce said plastic body (100);
- injecting plastic material into the mould to produce said plastic body (100);
- wrapping said portion of said electrical contact (101) at least partially around said plastic body.
